Europäisches Patentamt

European Patent Office

Office européen des brevets

(19)

(11) EP 0 557 809 B1

(12) **EUROPÄISCHE PATENTSCHRIFT**

(45) Veröffentlichungstag und Bekanntmachung des Hinweises auf die Patenterteilung:
22.01.1997 Patentblatt 1997/04

(51) Int Cl.$^6$: **H02K 3/28**

(21) Anmeldenummer: **93102155.4**

(22) Anmeldetag: **11.02.1993**

(54) **Mehrphasige Wicklung in Stern-Polygon-Mischschaltung für eine elektrische Maschine**

Combined star-polygon plural phase winding for an electric machine

Enroulement polyphasé de type combiné étoile-polygone pour une machine électrique

(84) Benannte Vertragsstaaten:
**CH DE LI SE**

(30) Priorität: **27.02.1992 DE 4206083**

(43) Veröffentlichungstag der Anmeldung:
**01.09.1993 Patentblatt 1993/35**

(73) Patentinhaber: **SIEMENS AKTIENGESELLSCHAFT**
**80333 München (DE)**

(72) Erfinder: **Auinger, Herbert, Dr.**
**W-8500 Nürnberg (DE)**

(56) Entgegenhaltungen:
EP-A- 0 018 835          DE-A- 3 202 958
GB-A- 1 257 195

- PROCEEDINGS OF THE INSTITUTION OF ELECTRICAL ENGINEERS, Bd. 117, Nr. 8, August 1970, New York, US, Seiten 1657-1666; A. HUGHES : "New 3-phase winding of low m.m.f.-harmonic content"

## Beschreibung

Die Erfindung betrifft eine mehrphasige Wicklung in Stern-Polygon-Mischschaltung für eine elektrische Maschine. Durch die DE-C-32 02 958 ist eine gesehnte dreiphasige Wicklung in Stern-Dreieck-Mischschaltung für Ständer oder Schleifringläufer einer elektrischen Maschine bekannt. Zur Verringerung der Durchflutungs-Oberwellenanteile und der Kupferverluste sind die inneren Wicklungsabschnitte durch Ausgleichsleiter in Dreieckschaltung verbunden, an die jeweils zwei parallele, gegenüber den Dreiecksabschnitten um 30° el versetzte, mit den Klemmen verbundene äußere Wicklungsabschnitte sternförmig angeschlossen sind. Die räumliche Aufteilung der Wicklungsabschnitte ist dabei so vorgenommen, daß sich innerhalb eines jeden Polpaares eine zwölfzonige Wicklungsanordnung ergibt.

Die GB-A-1 257 195 und die EP-A-0 018 835 offenbaren derartige mehrphasige Wicklungen, wobei die Spulenwindungszahlen der Stern- und Dreieckzweige im Verhältnis

$$\frac{w_{Stern}}{w_{Dreieck}} \approx \frac{1}{\sqrt{3}}$$

ausgeführt sind.

Bei stromrichtergespeisten elektrischen Maschinen können maschinenseitig Durchflutungsoberwellen und/oder Oberschwingungsströme auftreten, die im Zusammenwirken mit den hinzukommenden stromrichterbedingten Strom- und Spannungsoberschwingungen verschiedenste Parasitäreffekte, wie z.B. Pendelmomente, magnetische Geräusche oder Zusatzverluste verursachen können.

Diese Problemstellung existiert insbesondere bei zweipoligen Synchronmaschinen größerer Leistung mit einer Ständerwicklung aus vorgefertigten Formspulen. Um die Formspulen bei der Herstellung einlegen zu können, ist man gezwungen, eine relativ starke Sehnung auf etwa $W/\tau \approx 2/3$ vorzunehmen. Im Hinblick auf die Durchflutungsoberwellen mit Ordnungszahlen $\nu = 5, 7$ wäre hingegen eine Sehnung $W/\tau \approx 5/6$ wünschenswert. Aufgrund der Sehnungsfaktoren

$$\xi_{S\nu} = \sin\left(\nu \, \frac{W}{\tau} \cdot \frac{\pi}{2}\right) \tag{1}$$

ergeben sich bei 2/3-Sehnung im Vergleich mit 5/6-Sehnung für die Ordnungszahl $\nu = 1$ wegen $\xi_{S1}$ (5/6) = 0,966 und $\xi_{S1}$ (2/3) = 0,866 eine 0,897-fache Grundwelle, d.h. eine ungefähr 11 % schlechtere Ausnutzung. Für die Ordnungszahlen $\nu = 5, 7$ erhält man hingegen wegen $\xi_{S\nu}$ (5/6) = = 0,259 und $\xi_{S\nu}$ (2/3) = 0,866 eine 3,346-fach vergrößerte Harmonische.

Eine bekannte Abhilfemaßnahme zur gezielten Verringerung einzelner störender Wicklungsharmonischer ist die Strangverschachtelung der Wicklungszonen bei unveränderter Spulensehnung. Neben einer komplizierteren Schaltung sind hierbei ein nochmals verringerter Grundwellen-Wicklungsfaktor, die Verstärkung von Oberwellen anderer Ordnungszahlen sowie wickelkopfseitig eine erhöhte Spannungsbeanspruchung der Spulenisolation innerhalb der Verschachtelungsbereiche von Nachteil.

Gemäß einem weiteren Vorschlag (H. Eichhöfer, V. Sastry, H. Weh: "6-pulsige wechselrichtergespeiste Asynchronmaschine etz-b 26 (1974), Seiten 601-603 und A. Hughes: "New 3-phase winding of low m.m.f.-harmonic content" Proc. IEE 117 (1970), Seiten 1657-1666) werden die $\pi/3$-breiten Wicklungszonen der dreiphasigen Wicklung in jeweils zwei elektrisch um $\pi/6$ versetzte Abschnitte unterteilt und zu einer Stern-Dreieck- Parallelschaltung zusammengefaßt. Aufgrund der dadurch erzielten 12-zonigen Durchflutungsverteilung werden einerseits die fünfte und siebte Harmonische deutlich vermindert, andererseits können jedoch aufgrund der unterschiedlichen Oberwellenwindungszahlen im Stern- und Dreieck-Wicklungsteil ausgeprägte Ausgleichsströme $\nu$-facher Frequenz auftreten.

Wicklungsausführungen gemäß dem vorgenannten Vorschlag erfordern bei einheitlichen Wicklungsspulen eine Zonenunterteilung für die Stern- und Dreieckzweige im Verhältnis $q_Y : q_\Delta = 4 : 7$ oder, da dies im allgemeinen nicht möglich ist, derart angepaßte unterschiedliche Spulenwindungszahlen $w_Y$ und $w_\Delta$, daß die effektiven Strangwindungszahlen

$$\xi_{1Y} \cdot w_Y \cdot q_Y \approx \frac{1}{\sqrt{3}} \cdot \xi_{1\Delta} \cdot w_\Delta \cdot q_\Delta \tag{2}$$

praktisch gleich sind. Dies ist allerdings nur für die Ordnungszahl $\nu = 1$ erreichbar. Für die Ordnungszahlen $\nu = 5$ und $\nu = 7$ sind die beiden Wicklungsteile - wie in FIG 1 und 2 dargestellt - im wesentlichen gegenphasig. Dadurch ergibt sich die gewünschte Minderung der Oberwellendurchflutungen, weil sie sich teilweise aufheben (siehe hierzu die Zahlenwerte in Tabelle I für das Beispiel nach A. Hughes: "New 3-phase winding of low m.m.f.-harmonic content" Proc. IEE 117 (1970), Seiten 1657-1666) mit einer Zonenaufteilung $q_Y + q_\Delta = 7 + 4 = 11$ Nuten pro Pol und Strang gemäß FIG 3 und durchwegs einheitlichen Wicklungsspulen.

Die prinzipiell gleiche Situation liegt auch bei Synchronmaschinen mit zwei um $\pi/6$ versetzten dreisträngigen Wicklungssystemen vor. Bei solchen Maschinen treten z.B. bei einem Dauer-Kurzschlußversuch in beiden Wicklungssystemen ausgeprägte, zueinander gegenphasige Stromoberschwingungen $\nu = 5$-facher Frequenz auf, die aus dem Zusammenwirken der beiden Wicklungssysteme (magnetische Kopplung) resultieren. Neben erhöhten Wicklungsverlusten verursachen derartige Stromoberschwingungen insbesondere bei stromrichtergespeisten Synchronmaschinen im Zusammenwirken mit den umrichterbedingten Oberschwingungen eine Reihe von Parasitäreffekten. Bei Betrieb an einem nicht stromeinprägenden Frequenzumrichter, z.B. einem Direktumrichter, können sich auf diese Weise in beiden Parallelsystemen im Gegentakt pulsierende Oberschwingungs-Stromkomponenten ausbilden, die sich dem Grundschwingungsstrom überlagern und Pendelmomente, Schwingungen sowie Geräusche verursachen.

Aufgabe der vorliegenden Erfindung ist es deshalb, auf kostengünstige und einfache Weise eine mehrphasige Wicklung der eingangs genannten Art zu schaffen, durch die bei elektrischen Maschinen störende Durchflutungsoberwellen, Oberschwingungsströme und Parasitäreffekte, wie z.B. Pendelmomente, magnetische Geräusche oder Zusatzverluste, vermieden werden, ohne hierbei die Maschinenausnutzung zu verringern. Gleichzeitig soll die Spannungsbeanspruchung im Wickelkopf verringert werden.

Die Aufgabe wird erfindungsgemäß durch die im Anspruch 1 angegebenen Merkmale gelöst. Vorteilhafte Ausgestaltungen der Erfindung sind in den Unteransprüchen beschrieben.

Die mehrphasige Wicklung gemäß Anspruch 1 umfaßt einen ersten Wicklungsteil, dessen Wicklungszweige in Polygon geschaltet sind, sowie einem zweiten Wicklungsteil, dessen Wicklungszweige jeweils um einen elektrischen Winkel $\alpha = (\pi/2 - \pi/m)$ phasenversetzt angeordnet und sternartig an den ersten Wicklungsteil angeschlossen sind. Die Zahl der Wicklungszweige beider Wicklungsteile entspricht hierbei jeweils der Phasenzahl m. Durch möglichst einheitlich breite Wicklungszonen sowie durch eine Aufteilung der Spulenwindungszahlen $w_{Stern}$ und $w_{Polygon}$ der Stern- bzw. Polygonzweige im Verhältnis von

$$w_{Stern} : w_{Polygon} \approx 1 : 2 \sin (\pi/m) \approx A_{Polygon} : A_{Stern}$$

werden nahezu einheitliche Stromdichten, Verluste sowie Spulendurchflutungen erzielt. Der Term $2 \sin (\pi/m)$ ergibt sich hierbei aus der Beziehung

$$2 \cos \alpha = 2 \cos (\pi/2 - \pi/m) = 2 \sin (\pi/m).$$

Mit A ist hierbei der Leiterquerschnitt bezeichnet. Unter Wicklungszone versteht man die in Umfangsrichtung zu zählende Breite, innerhalb der die zu einem Zweig bzw. zum selben Strang gehörenden Spulen angeordnet sind.

Den kleinstmöglichen Oberwellengehalt erzielt man bei einer mehrphasigen Wicklung gemäß Anspruch 3. Beide Wicklungsteile weisen dann für alle Harmonischen jeweils identische Zahlenwerte für die Wicklungsfaktoren auf. Für $m = 3$ betragen die Ordnungszahlen gemäß der Beziehung $\nu = n (2m) \pm 1$; dabei ergeben sich für $n =$ geradzahlig in beiden Wicklungsteilen jeweils gleichphasig wirkende, d.h. sich addierende Durchflutungsanteile mit den Ordnungszahlen $\nu = 1;11,13;23,25; \dots$ Für $n =$ ungeradzahlig ergeben sich die Ordnungszahlen $\nu = 5,7;17,19; 29,31; \dots$ und die Wicklungsteile addieren sich gegenphasig, d.h. im Idealfall heben sich diese Durchflutungsanteile auf. Im realen Fall verbleiben geringe Restanteile, da die Spulenwindungszahlen bei einer dreiphasigen Wicklung für die Dreieckzweige nur näherungsweise $\sqrt{3}$-mal so groß wie für die Sternzweige ausführbar sind. In Tabelle II sind für ein konkretes Ausführungsbeispiel Zahlenwerte im Vergleich mit einer herkömmlichen Wicklungsaufteilung angegeben.

Die Erfindung sowie weitere vorteilhafte Ausgestaltungen werden im folgenden anhand von Ausführungsbeispielen näher erläutert; darin zeigen:

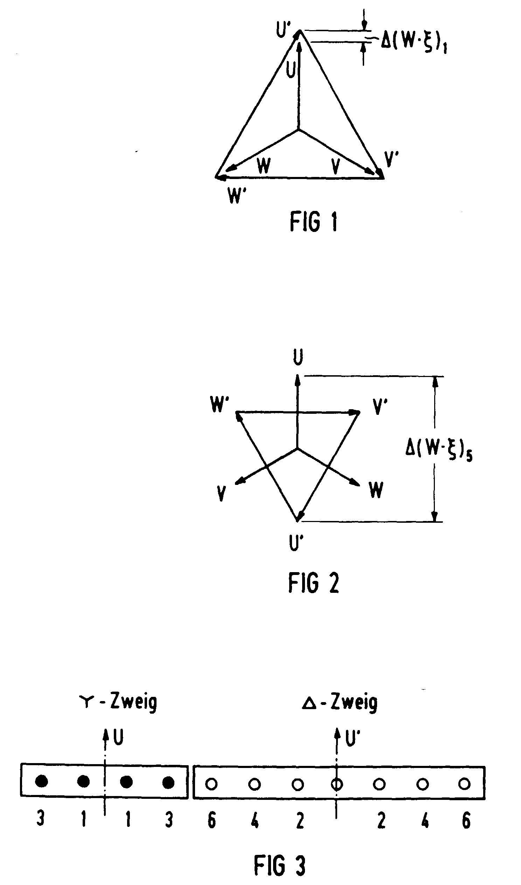

FIG 1+2     die bereits erläuterten Verhältnisse bei einer $m = 3$-phasigen Stern-Dreieck-Parallelschaltung nach dem Stand der Technik für $\nu = 1$ (FIG 1) und $\nu = 5$ (FIG 2),

FIG 3       den zugehörigen bereits beschriebenen Zonenplan einer Wicklung gemäß dem Stand der Technik mit q = 11 Nuten/ Pol und Strang,

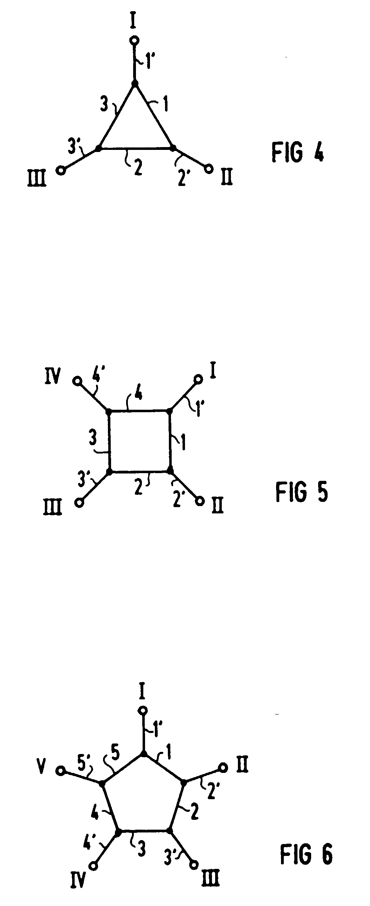

FIG 4-6     die prinzipielle Struktur erfindungsgemäßer Stern-Polygon-Mischschaltungen für eine mehrphasige Wicklung einer elektrischen Maschine mit m = 3, 4 und 5,

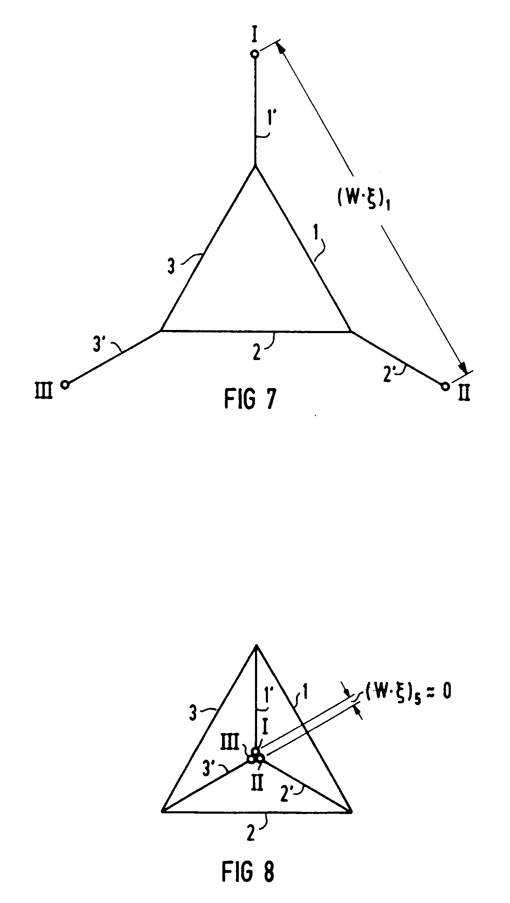

FIG 7+8     die Wirkung einer $m = 3$-phasigen Stern-Polygon-Mischschaltung gemäß FIG 4 für die Ordnungszahlen $\nu = 1$ bzw. $\nu = 5$,

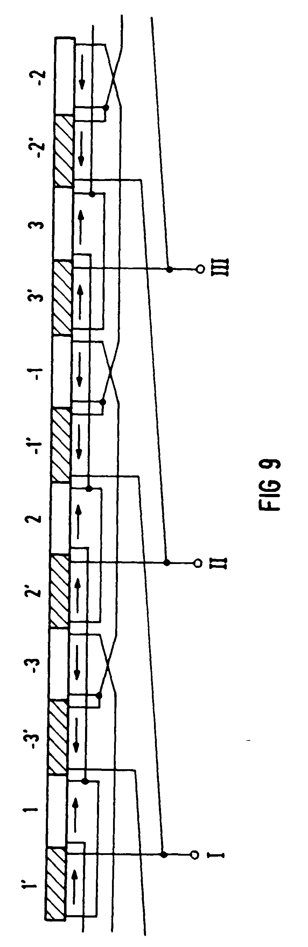

FIG 9       Zonenplan und Schaltungsschema einer 2-poligen $m = 3$-phasige Wicklung in Stern-Dreieck-Mischschaltung,

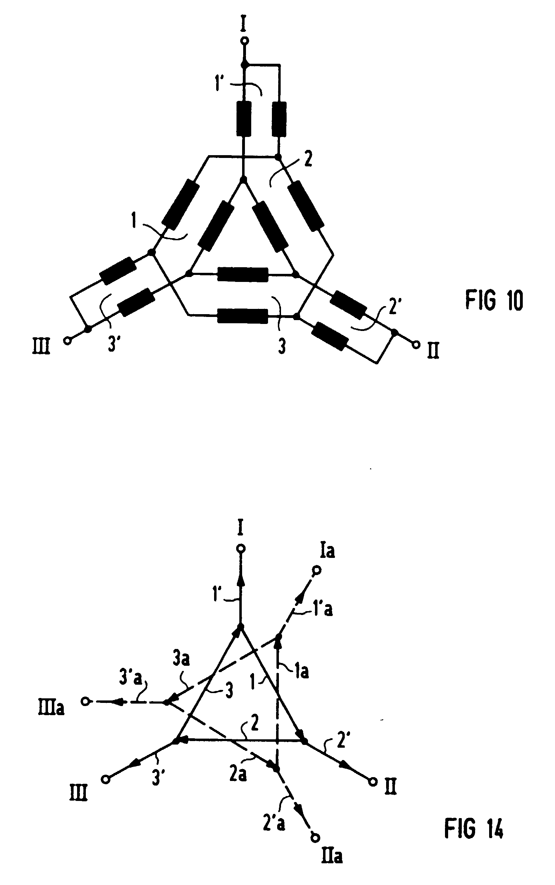

FIG 10      das Schaltbild der Wicklung gemäß FIG 9 mit a = 2 Parallelzweigen,

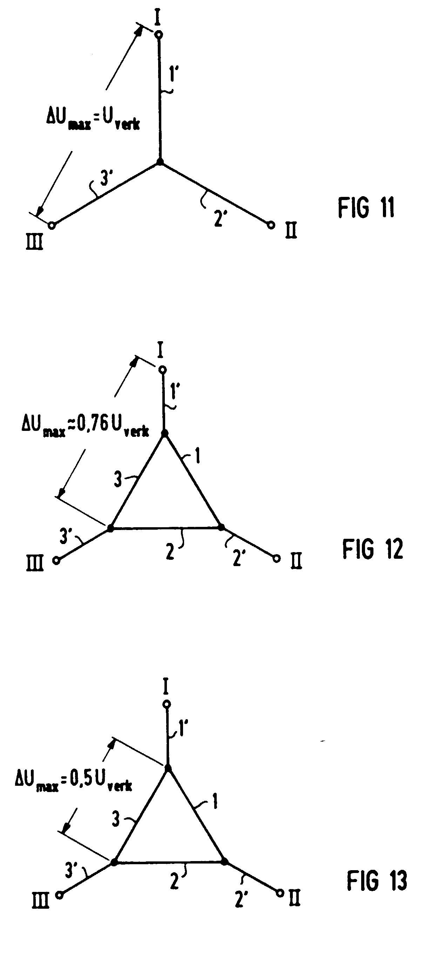

FIG 11-13      die Spannungsbeanspruchung der Stirnseitenisolation bei verschieden ausgeführten m = 3-Phasenwicklungen für 2p = 2 mit a = 2 Parallelzweigen,

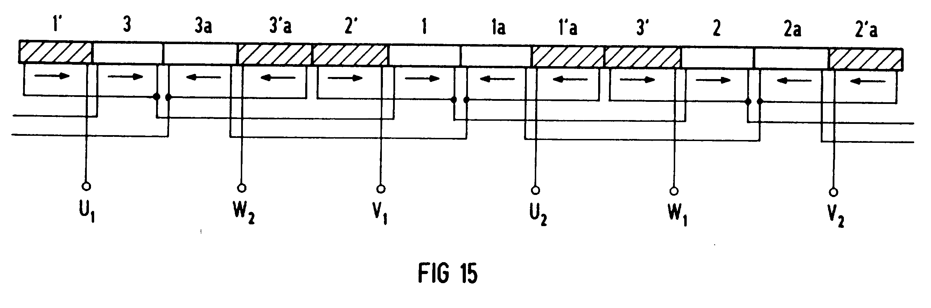

FIG 14      eine m = 2 × 3-phasige Wicklungsanordnung mit 2 um π/6 versetzten in Stern-Dreieck-Mischschaltung ausgeführten Wicklungssystemen,

FIG 15      Zonenplan und Schaltungsschema des Wicklungssystems gemäß FIG 14,

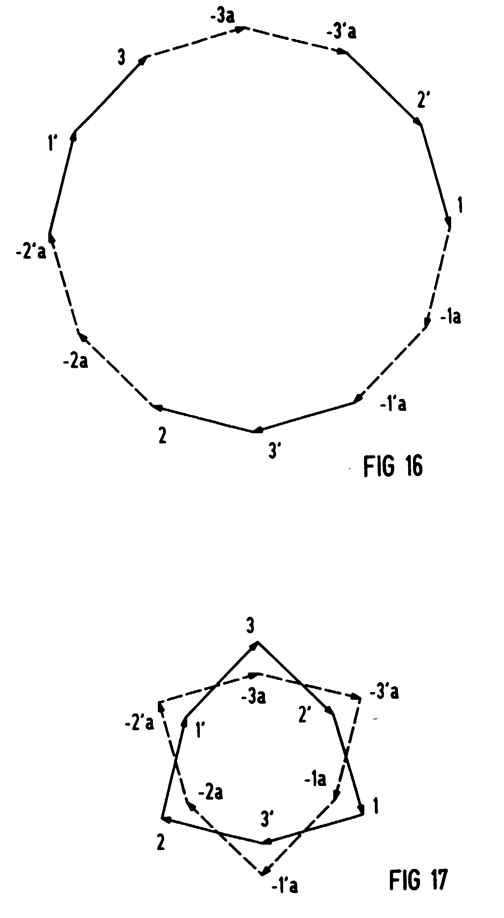

FIG 16      die resultierende Felderregerkurve (Durchflutungsverlauf) des Wicklungssystems gemäß FIG 14,

FIG 17      die resultierende Felderregerkurve (Durchflutungspolygon) des Wicklungssystems gemäß FIG 14 bei Notbetrieb mit nur einem Wicklungssystem,

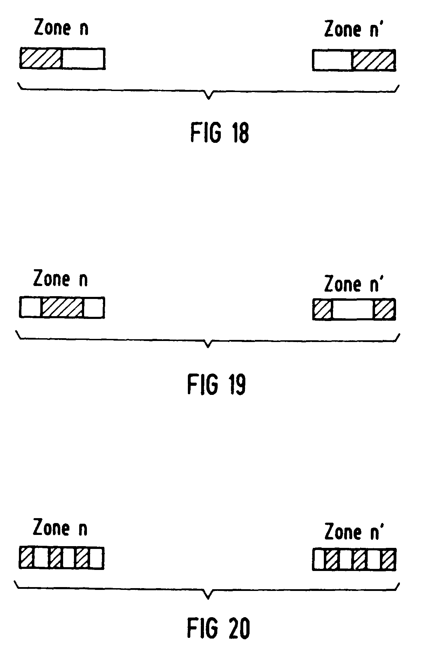

FIG 18-20      Möglichkeiten zur unterteilten Anordnung der längs des Umfangs verteilten Wicklungssysteme zur Vermeidung von geradzahligen Feldharmonischen bei Notbetrieb.

In den FIG 4-6 ist die prinzipielle Struktur erfindungsgemäßer Stern-Polygon-Mischschaltungen für die Phasenzahlen m = 3,4 und 5 dargestellt. Mit 1-5 sind hierbei die Wicklungszweige des ersten Wicklungsteils bezeichnet, die ein Polygon (für m = 3 ein Dreieck) bilden; mit 1'-5' sind die Wicklungszweige des zweiten Wicklungsteils bezeichnet, die sternartig an den ersten Wicklungsteil angeschlossen sind.

Zur Erzielung nahezu einheitlicher Stromdichten, Verluste und Spulendurchflutungen sind die Spulen der Stern- und Polygon zweige mit im Verhältnis

$$w_{Stern} : w_{Polygon} \approx 1{:}2 \sin \pi/m \approx A_{Polygon} : A_{Stern}$$

unterschiedlichen Windungszahlen w bzw. reziprok dazu Leiterquerschnitten A auszuführen. Den kleinstmöglichen Oberwellengehalt erzielt man mit einheitlich breiten Wicklungszonen für die Stern- und Polygonzweige, d.h. einer Wicklungsunterteilung im Verhältnis 1:1. Beide Wicklungsteile weisen dann für alle Harmonischen jeweils identische Zahlenwerte für die Wicklungsfaktoren auf. Im Falle einer m = 3-phasigen Stern-Dreieckschaltung ergeben sich für die Ordnungszahlen $\nu$ = 1;11,13;23,25... gleichphasig wirkende Wicklungsteile (FIG 7 für Ordnungszahl $\nu$ = 1). Für die Ordnungszahlen $\nu$ = 5,7;17,19; 29,31;... sind die Wicklungsteile gegenphasig (FIG 8 für $\nu$= 5), d.h. die entsprechenden Durchflutungsanteile heben sich (weitestgehend) auf.

In Tabelle II sind die Oberwellen-Wicklungsfaktoren für ein konkretes Beispiel mit q = 6 + 6 Nuten pro Pol und Strang und Spulenwindungszahlen $w_{Stern}$ = 3 und $w_{Dreieck}$ = 5 im Vergleich mit einer konventionellen Wicklungsausführung zusammengestellt.

Die FIG 9 und 10 zeigen die zugehörige Schaltung einer solchen 2-poligen Wicklung, bei der jeweils diametral gegenüberliegende Wicklungszonen elektrisch gleichwertige Parallelzweige bilden.

Die Dreieckszweige 1,2 und 3 sind hier nicht unmittelbar, sondern über die Sternzweige 1',2' und 3' an den Anschlußklemmen I,II bzw.III miteinander verbunden.

Verglichen mit einer konventionellen 6-Zonen-Wicklung ergibt die Stern-Dreieck-Mischschaltung gemäß Tabelle II einen um 3,5 % größeren Grundwellenwicklungsfaktor (höhere Ausnutzung). Die relativen Oberwellenanteile sind für $\nu$ = 11,13;23,25;... unverändert und für $\nu$ = 5,7;17,19;... auf das 0,072-fache (Faktor 14) verringert.

Gegenüber der bekannten Stern-Dreieck-Parallelschaltung (Tabelle I) sind damit die im allgemeinen besonders störenden Oberwellen mit $\nu$ = 5, 7 nochmals um den Faktor 5 bzw. etwa 7 kleiner. Darüber hinaus können bei der erfindungsgemäßen Stern-Dreieck-Mischschaltung keine Ausgleichsströme mehr fließen. Weiterhin bestehen hinsichtlich der praktischen Wicklungsausführung, d.h. für die Festlegung der Zonenunterteilung $q_{Stern} : q_{Dreieck}$ ($\approx$1), der Windungszahlen $w_{Stern} : w_{Dreieck}$ ($\approx$1/$\sqrt{3}$) sowie der Leiterquerschnitte $A_{Stern} : A_{Dreieck}$ ($\approx \sqrt{3}$) wesentlich mehr Freizügigkeiten und Anpassungsmöglichkeiten als bei der bekannten Stern-Dreieck-Parallelschaltung. Die in Klammern angegebenen Vorzugswerte bewirken den insgesamt kleinstmöglichen Oberwellengehalt (reguläres zwölfeckiges Durchflutungspolygon für jede Nutschicht) bei durchwegs einheitlichen Stromdichten und Verlusten in den Wicklungsspulen. Für die Praxis lassen sich aber auch mit von diesen Vorzugswerten abweichenden Relationen eine Vielzahl weiterer brauchbarer und vorteilhafter Ausführungsvarianten erzielen, so z.B. bis hin zu Stabwicklungen gemäß der DE-C-32 02 958 mit $A_{Stern}{:}A_{Dreieck}$ = 2.

Ein weiterer Vorteil der Stern-Dreieck-Mischschaltung gemäß den FIG 9 und 10 besteht in einer verringerten Spannungsbeanspruchung im Wickelkopf.

Bei einer konventionell in Sternschaltung ausgeführten sechszonigen Dreiphasenwicklung für 2p = 2 mit a = 2 Parallelzweigen kommen an drei Stellen des Umfanges jeweils Eingangsspulen der drei Stränge nebeneinander zu liegen. Die Stirnseitenisolation und die Schenkelabstände sind daher für die volle verkettete Spannung zu bemessen (FIG 11).

Bei der Schaltung nach FIG 9 kommen hingegen neben den Eingangsspulen mit vollem Potential (Sternzweige) jeweils nur auf halbem Potentialniveau der Nachbarstränge befindliche Spulen von Dreieckszweigen zu liegen. Die für die Spannungsbeanspruchung maßgebliche Potentialdifferenz ist damit auf das 1/2 .

$$\sqrt{7/3} \approx 0{,}76\text{-}$$

fache der verketteten Spannung reduziert (FIG 12).

Im übrigen läßt sich durch sinngemäße Übertragung der aus der DE-C-28 41 415 bekannten Schaltungsmaßnahme für sterngeschaltete Stränge zur Verringerung von $\Delta U_{max} = = U_{verk.}$ (FIG 11) auf $\Delta U_{max} = U_{ph} = 0{,}58\ U_{verk.}$ - auch bei einer Stern- Dreieck-Mischschaltung die Spannungsbeanspruchung noch weiter auf $\Delta U_{max} = 0{,}5\ U_{verk.}$ verringern (FIG 13).

Ausgehend von dem Beispiel nach FIG 9 sind die Spulen der Stern- oder Dreieckszweige dazu bei unveränderter Durchflutungsrichtung in umgekehrter Reihenfolge anzuschließen, wodurch sich die Potentialanstiegsrichtung der betreffenden Zweige umkehrt. Neben den Eingangsspulen der Sternzweige, mit maximalem Potential kommen dann jeweils nur auf halber Potentialstufe des gleichen Stranges befindliche Dreieckspulen zu liegen und als maximale Spannungsdifferenzen treten die Spannungen zwischen den Dreieckspunkten auf.

Als weiteres Beispiel zeigen die FIG 14 und 15 eine m = 2x3- phasige Wicklungsanordnung mit zwei um $\pi/6$ versetzten, in Stern-Dreieck-Mischschaltung ausgeführten Wicklungssystemen. Die zum ersten System gehörigen Zweige sind mit 1-3 (Dreieckzweige) bzw. 1'-3' (Sternzweige) bezeichnet; die Zweige des zweiten Systems sind mit la-3a (Dreieckzweige) bzw. 1'a-3'a (Sternzweige) bezeichnet.

In diesem Fall bringt zwar eine Stern-Dreieck-Mischschaltung der Einzelsysteme praktisch keine Verbesserung der resultierenden Felderregerkurve (FIG 16), da es sich auch bei der Ausführung gemäß dem Stand der Technik die Harmonischen der Ordnungszahlen $\nu = 5,7,17,19$ im Zusammenwirken beider Systeme aufheben. Bei der Wicklungsanordnung gemäß FIG 14 und 15 hingegen "neutralisieren" sich diese Harmonischen gemäß FIG 8 zumindest weitgehendst bereits innerhalb eines jeden Einzelsystems.

Von besonderer Bedeutung ist hier jedoch, daß die bei $\nu = 5,7$ wirksamen Strangwirkungszahlen $(w.\xi)_\nu \approx 0$ betragen; damit induzieren diese Ordnungszahlen keine Oberwellenspannungen und es können keine störenden Oberschwingungsströme mehr auftreten.

Wie vorstehend bereits erläutert, bestehen bei Parallelbetrieb der beiden Systeme im resultierenden Durchflutungsverlauf (FIG 16) keine signifikanten Unterschiede gegenüber einem dreiphasigen in Stern-Dreieck-Mischschaltung ausgeführten Wicklungssystem nach FIG 10. In beiden Fällen liegt die gleiche 12-zonige Wicklungsverteilung zugrunde (vergl. FIG 9 und 15).

Zu beachten ist allerdings, daß die beiden Teilsysteme gemäß FIG 15 jeweils nur 3-zonig über den Umfang verteilt sind. Bei Notbetrieb mit nur einem Wicklungssystem allein muß man daher bei gesehnter Wicklung ein nur dreiachsig symmetrisches Durchflutungspolygon (FIG 17) mit geradzahligen Harmonischen in Kauf nehmen. Die in FIG 17 dargestellten Durchflutungspolygone für die beiden Wicklungssysteme gelten jeweils für eine Nutschicht. Die zweite Nutschicht der Zweischicht-Wicklung ist um den der Spulenschrittweite W entsprechenden Winkel phasenversetzt und gegensinnig stromdurchflossen. Beide Nutschichten zusammen ergeben demnach nur bei ungesehnter Wicklung eine sechsachsige symmetrische Summendurchflutung gemäß FIG 16 ohne geradzahlige Harmonische (wie für beide Wicklungssysteme zusammen). Bei 2/3-Sehnung hingegen bleibt der Verlauf der Summendurchflutung aus Ober- und Unterschicht gegenüber FIG 17 unverändert und weist maximal ausgeprägte geradzahlige Harmonische auf. Für andere Spulensehnungen ergeben sich zwischen diesen Grenzfällen liegende ebenfalls nur dreiachsig symmetrische Durchflutungsverläufe mit weniger stark ausgeprägten geradzahligen Harmonischen.

Will man auch im Notbetrieb mit nur einem Wicklungssystem solche geradzahligen Feldharmonischen unabhängig von der Spulensehnung vermeiden, muß man jedes Wicklungssystem längs des Umfanges sechszonig verteilt anordnen. Die einzelnen Wicklungszweige sind dazu jeweils auf beide in FIG 15 diametral zueinander liegende, gleichphasige Wicklungszonen 1' und 1a, 3 und 1'a usw. zu verteilen.

In den FIG 18-20 sind hierfür eine Möglichkeiten angedeutet: FIG 18 zeigt hierbei eine mittige Unterteilung jeder Zone und wechselweise Zuordnung von linker bzw. rechter Hälfte den einen bzw. anderen Zweig. Eine weitere Variante mit dreifach unterteilten Zonen ist in FIG 19 dargestellt, wobei die jeweils doppelt breiten Mittenbereiche dem einen und die beiden Randabschnitte dem anderen Zweig zugeordnet sind. Eine dritte Variante mit einer Unterteilung bei der abwechselnd jede zweite Spule zum selben Zweig gehört, ist in FIG 20 dargestellt. Die Aufteilungen gemäß den FIG 18-20 sind komplizierter und benötigen gegenüber einer Aufteilung nach FIG 15 mehr Schaltverbindungen.

**Tabelle I:**           Stern–Dreieck–Parallelschaltung gemäß dem Stand der Technik
q = 11 Nuten/Pol und Strang, Aufteilung: 7 + 4

| | eff. Zweigwindungszahlen | | Summendurchflutung | | verglichen mit nor-maler Sternschaltung für q = 11 $|\%|$ | Windungszahldifferenz | |
|---|---|---|---|---|---|---|---|
| | $w = 7\ \xi_{z\Delta}$ | $w = 4\ \xi_{zY}$ | $\sim w_\Delta + w_Y$ | % | | $|w_Y - w_\Delta/\sqrt{3}|$ | % *) |
| 1 | 6,8738 | 3,9774 | 10,8512 | 100 | 103,26 | 0,0088 | 3,22 |
| 5 | -4,222 | 3,4551 | - 0,7673 | -7,07 | 36,18 | 5,8929 | 148,33 |
| 7 | -2,2128 | 2,9713 | 0,7585 | 6,99 | 49,62 | 4,2488 | 106,94 |
| 11 | -1 | 1,7321 | 0,7321 | 6,75 | 73,21 | 2,3094 | 58,13 |
| 13 | -1,6005 | 1,0657 | -0,5348 | -4,93 | 62,04 | 1,9897 | 50,08 |
| 17 | +0,8015 | -0,1313 | 0,6701 | 6,18 | 96,99 | 0,5941 | 14,95 |
| 19 | -0,0605 | -0,5829 | -0,6435 | -5,93 | 101,17 | 0,6179 | 15,55 |
| 23 | 1,1047 | -1,0632 | 0,0415 | 0,38 | 9,09 | 1,7010 | 42,81 |
| 25 | 0,9574 | -1,0759 | -0,1185 | 1,09 | 22,00 | 1,6287 | 40,99 |
| 29 | -0,2401 | -0,7028 | -0,4627 | 4,26 | 90,87 | 0,8414 | 21,18 |
| 31 | +0,7896 | -0,3794 | 0,4163 | 3,48 | 82,88 | 0,8292 | 20,87 |
| 35 | -0,7896 | 0,3734 | -0,4163 | 3,48 | | | |
| 37 | -0,2401 | 0,7028 | 0,4627 | 4,26 | | | |

*) bezogen auf Mittelwert für $\nu = 1 : 1/2\ (w_Y + w_\Delta\ /\ \sqrt{3}) = 3,9730$

EP 0 557 809 B1

Tabelle II

| Vergleich der Wicklungsfaktoren | | | | |
|---|---|---|---|---|
| Stern-Dreieck-Mischschaltung gemäß der Erfindung q = 6 + 6 | | | konventionelle Sternschaltung (Stand der Technik) q = 12; $w_Y = 3$ | |
| $w_Y = 3 \; w_\Delta = 5$ 25/36-gesehnt | | | 25/36-gesehnt | |
| 1 | 0,8772 | 100 % | 0,8473 | 100 % |
| 5 | 0,0105 | 1,2 | 0,1419 | 16,8 |
| 7 | 0,0101 | 1,1 | 0,1353 | 16,0 |
| 11 | 0,0502 | 5,7 | 0,0485 | 5,7 |
| 13 | 0,0802 | 9,1 | 0,0775 | 9,1 |
| 17 | 0,0014 | 0,2 | 0,0185 | 2,2 |
| 19 | 0,0040 | 0,5 | 0,0539 | 6,4 |
| 23 | 0,0022 | 0,3 | 0,0022 | 0,3 |
| 25 | 0,041 | 4,7 | 0,0396 | 4,7 |
| 29 | 0,0007 | 0,1 | 0,0095 | 1,1 |
| 31 | 0,0021 | 0,2 | 0,0288 | 3,4 |
| 35 | 0,0199 | 2,3 | 0,0193 | 2,3 |

## Patentansprüche

1. Mehrphasige Wicklung in Stern-Polygon-Mischschaltung für eine elektrische Maschine mit einem ersten Wicklungsteil, dessen m Wicklungszweige (1-6;1a-6a) in Polygon geschaltet sind, und mit einem zweiten Wicklungsteil aus einer der Phasenzahl m des ersten Wicklungsteils entsprechenden Zahl von sternartig an den ersten Wicklungsteil angeschlossenen Wicklungszweigen (1'-6';1a'-6a'), wobei jeder Sternzweig gegenüber seinen beiden schaltungstechnisch benachbarten Polygonzweigen um einen elektrischen Winkel $\alpha = (\pi/2 - \pi/m)$ phasenversetzt ist und die einzelnen Stern- und Polygonzweige mit möglichst einheitlich breiten Wicklungszonen sowie im Verhältnis $w_{Stern} : w_{Polygon} \approx 1 : 2 \sin (\pi/m)$ unterschiedlichen Spulenwindungszahlen w ausgeführt sind.

2. Mehrphasige Wicklung nach Anspruch 1, mit m = 3, wobei die Spulenwindungszahlen der Stern- und Dreieckzweige im Verhältnis $w_{Stern} : w_{Dreieck} \approx 1 : \sqrt{3}$ ausgeführt sind.

3. Mehrphasige Wicklung nach Anspruch 1 oder 2, wobei für die Stern- und Polygonzweige eine hälftige Unterteilung oder eine dieser möglichst nahekommende Unterteilung der $\frac{2\pi}{m}$ breiten Wicklungszonen vorgesehen ist.

4. Mehrphasige Wicklung nach Anspruch 1, wobei sowohl die Sternzweige als auch die Dreieckzweige jeweils derart aus Spulengruppen mit einer zur jeweiligen Durchflutungsrichtung gleichsinnigen Potentialanstiegsrichtung und/ oder aus Spulengruppen mit einer zur jeweiligen Durchflutungsrichtung gegensinnigen Potentialanstiegsrichtung zusammengesetzt sind, daß die maximal auftretende Spannungsdifferenz

$$\Delta U_{max} = 0,5 \; U_{verk}$$

beträgt (FIG 13).

5. Mehrphasige Wicklung nach Anspruch 4, wobei alle Dreieckzweige aus Spulengruppen mit einer zur jeweiligen Durchflutungsrichtung gegensinnigen Potentialanstiegsrichtung und alle Sternzweige aus Spulengruppen mit einer zur jeweiligen Durchflutungsrichtung gleichsinnigen Potentiananstiegsrichtung oder umgekehrt zusammengesetzt sind.

6. Mehrphasige Wicklung nach Anspruch 1, mit einer Aufteilung in k galvanisch getrennte Subsysteme, die gegeneinander jeweils um $\frac{\pi}{k \cdot m}$ versetzt sind.

7. Mehrphasige Wicklung nach Anspruch 6, für ein m = 2 x 3- phasiges Wicklungssystem mit insgesamt 12 Wicklungszonen pro Polpaar (FIG 15).

8. Mehrphasige Wicklung nach Anspruch 7, wobei jede Wicklungszone in Abschnitte unterteilt ist, die abwechselnd jeweils den in Stern und Polygon geschalteten Zweigen zugeordnet sind (FIG 18-20).

## Claims

1. Polyphase winding in star-polygon hybrid circuit for an electrical machine having a first winding part, the m winding branches (1-6;1a-6a) of which are polygon-connected, and having a second winding part comprising a number of winding branches (1'-6';1a'-6a') star-connected to the first winding part, which number corresponds to the phase number m of the first winding part, whereby each star branch is phase-displaced by an electrical angle a = ($\pi$/2 -$\pi$/m) with respect to its two polygon branches which are adjacent in terms of circuit engineering and the individual star and polygon branches are designed with winding zones which are as far as possible uniformly wide and with different coil turn numbers w in the ratio $w_{star} : w_{polygon} = 1 : 2 \sin (\pi/m)$.

2. Polyphase winding according to claim 1, in which m = 3, whereby the coil turn numbers of the star and delta branches are designed in the ratio $w_{star}: w_{delta} \approx 1 : \sqrt{3}$.

3. Polyphase winding according to claim 1 or 2, whereby for the star and polygon branches a division by half or a division of the $2\pi$/m wide winding zones which approximates this as far as possible is provided.

4. Polyphase winding according to claim 1, whereby both the star branches and the delta branches are composed in each case of coil groups with a potential rise direction in the same direction as the respective electric-loading direction and/or of coil groups with a potential rise direction in the opposite direction to the respective electric-loading direction, in such a way that the maximum occurring voltage difference amounts to $\Delta U_{max}$ - 0.5 $U_{p-base-to-phase}$ (Figure 13).

5. Polyphase winding according to claim 4, whereby all delta branches are composed of coil groups with a potential rise direction in the opposite direction to the respective electric-loading direction and all star branches are composed of coil groups with a potential rise direction in the same direction as the respective electric-loading direction or conversely.

6. Polyphase winding according to claim 1, having a division into k metallically separated subsystems which are staggered with respect to each other in each case by $\frac{\pi}{k \cdot m}$.

7. Polyphase winding according to claim 6, for a m = 2 x 3- phase winding system with a total of 12 winding zones per pole pair (Figure 15).

8. Polyphase winding according to claim 7, whereby each winding zone is divided into sections which are alternately allocated in each case to the star-connected and polygon-connected branches (Figures 18-20).

## Revendications

1. Enroulement polyphasé en circuit mixte étoile-polygone pour une machine électrique ayant une première partie d'enroulement, dont m branches (1 à 6; 1a à 6a) d'enroulement sont branchées en polygone, et une seconde partie d'enroulement constituée de branches (1' à 6'; 1a' à 6a') d'enroulement connectées en étoile à la première partie d'enroulement et en un nombre correspondant au nombre m de phases de la première partie d'enroulement, chaque branche de l'étoile étant déphasée par rapport à ses deux branches de polygone voisine dans la technique des circuits d'un angle électrique a = ($\pi$/2 - $\pi$/m) et les diverses branches de l'étoile et du polygone étant réalisées par des zones d'enroulement de largeur la plus possible uniforme, ainsi qu'avec des nombres w de spires de bobines différant dans le rapport $w_{Etoile}: w$ Polygone $\approx 1 : 2 \sin (\pi/m)$.

2. Enroulement polyphasé suivant la revendication 1, dans lequel m = 3 et les nombres de spires de bobine des branches de l'étoile et du triangle sont réalisés dans le rapport $w_{Etoile} : w_{Triangle} \approx 1 : \sqrt{3}$.

3. Enroulement polyphasé suivant la revendication 1 ou 2, dans lequel il est prévu pour les branches de l'étoile et du polygone une subdivision en deux ou une subdivision approchant celle-ci le plus possible des zones d'enroulement de largeur

$$\frac{2\pi}{m}.$$

4. Enroulement polyphasé suivant la revendication 1, dans lequel à la fois les branches de l'étoile et les branches du triangle sont composées de groupes de bobines ayant un sens de montée du potentiel égal à celui de flux du courant magnétique et/ou de groupes de bobines ayant un sens de montée du potentiel en sens inverse du sens du flux du courant magnétique, de telle sorte que la différence de tension apparaissant au maximum soit

$$\Delta U_{max} = 0,5\ U_{verk}$$

(figure 13).

5. Enroulement polyphasé suivant la revendication 4, dans lequel toutes les branches du triangle sont composées de groupes de bobines dont le sens de montée du potentiel est inverse du sens du flux de courant magnétique et toutes les branches de l'étoile sont constituées de groupes de bobines dont le sens de montée du potentiel est le même que le sens du flux de courant magnétique ou inversement.

6. Enroulement polyphasé suivant la revendication 1, divisé en k sous-systèmes isolés galvaniquement, qui sont décalés l'un par rapport à l'autre chacun de $\frac{\pi}{k.m}$.

7. Enroulement polyphasé suivant la revendication 6, pour un système d'enroulement à m = 2 x 3 phases ayant en tout 12 zones d'enroulement par paire de pôles (figure 15).

8. Enroulement polyphasé suivant la revendication 7, dans lequel chaque zone d'enroulement est subdivisée en tronçons, qui sont associées en alternance aux branches branchées en étoile et en polygone (figures 18 à 20).

FIG 1

FIG 2

FIG 3

FIG 4

FIG 5

FIG 6

FIG 7

FIG 8

FIG 9

EP 0 557 809 B1

FIG 10

FIG 14

$$\Delta U_{max} = U_{verk}$$

**FIG 11**

$$\Delta U_{max} \approx 0.76 \, U_{verk}$$

**FIG 12**

$$\Delta U_{max} = 0.5 \, U_{verk}$$

**FIG 13**

EP 0 557 809 B1

| 1′ | 3 | 3a | 3′a | 2′ | 1 | 1a | 1′a | 3′ | 2 | 2a | 2′a |

$U_1$  $W_2$  $V_1$  $U_2$  $W_1$  $V_2$

FIG 15

FIG 16

FIG 17

Zone n

Zone n'

FIG 18

Zone n

Zone n'

FIG 19

Zone n

Zone n'

FIG 20